# EUROPÄISCHE PATENTANMELDUNG

(11) **EP 4 394 243 A1**
(43) Veröffentlichungstag der Anmeldung: **03.07.2024**
(21) Anmeldenummer: 22216978.1
(22) Anmeldetag: 28.12.2022
(51) Int. Cl.: F21S 41/63, F21S 41/153, F21S 41/663, G02B 26/08

(54) **LEUCHTMODUL FÜR EINE KRAFTFAHRZEUGLEUCHTE UND VERFAHREN ZUM BETREIBEN EINES SOLCHEN LEUCHTMODULS**

(71) Anmelder: ZKW Group GmbH, 3250 Wieselburg (AT)
(72) Erfinder: Haas, Erik, 3203 Rabenstein an der Pielach (AT); Aigner, Clemens, 3100 St. Pölten (AT); Miedler, Stefan, 3105 Unterradlberg (AT); Jiyoung, Jeong, Gyeonggi-do (KR); Hyung, Joo Kang, Seoul (KR); Sungdu, Kwon, Seoul (KR)
(74) Vertreter: Patentanwaltskanzlei Matschnig & Forsthuber OG

(57) **Zusammenfassung**

Die Erfindung betrifft ein Leuchtmodul (1) für eine Kraftfahrzeugleuchte umfassend eine Lichtquelle (10), eine Projektionseinheit (20), eine Ablenkeinheit (30), sowie eine Steuereinheit (40),
wobei die Lichtquelle (10) dazu eingerichtet ist, ein Lichtsteuersignal (41) zu empfangen und in Abhängigkeit von dem Lichtsteuersignal (41) räumlich moduliertes Licht (11) abzustrahlen,
wobei die Projektionseinheit (20) dazu eingerichtet ist, das von der Lichtquelle (10) abgestrahlte räumlich modulierte Licht (11) innerhalb eines Projektionswinkelbereiches (P) vor das Leuchtmodul (1) zu projizieren,
wobei die Ablenkeinheit (30) dazu eingerichtet ist, ein Ablenksteuersignal (42) zu empfangen und das von der Lichtquelle (10) abgestrahlte räumlich modulierte Licht (11) in Abhängigkeit von dem Ablenksteuersignal (42) zu manipulieren, sodass die Projektion (12) des von der Lichtquelle abgestrahlten räumlich modulierten Lichtes vor das Leuchtmodul (1) mit einem Verschiebungswinkel (W) innerhalb des Projektionswinkelbereiches (P) verschiebbar ist,
wobei die Steuereinheit (40) dazu eingerichtet ist, ein Eingangssignal (43) zu empfangen, auszuwerten und auf Grundlage dessen das Lichtsteuersignal (41) an die Lichtquelle (10) abzugeben,
wobei das Eingangssignal (43) einen ersten Lichtdatenblock (43a1) umfasst, der zumindest teilweise in einem ersten Zeitbereich (T1) repräsentativ für das abgestrahlte räumlich modulierte Licht der Lichtquelle (10) ist und in diesem ersten Lichtdatenblock erste Ablenkdaten (43b1) enthalten sind, welche im selben ersten Zeitbereich (T1) repräsentativ für einen ersten Verschiebungswinkel (WT1) sind.

## Beschreibung

Die Erfindung betrifft ein Leuchtmodul für eine Kraftfahrzeugleuchte umfassend eine Lichtquelle, eine Projektionseinheit, eine Ablenkeinheit, sowie eine Steuereinheit, wobei die Lichtquelle dazu eingerichtet ist, ein Lichtsteuersignal zu empfangen und in Abhängigkeit von dem Lichtsteuersignal räumlich moduliertes Licht abzustrahlen, wobei die Projektionseinheit dazu eingerichtet ist, das von der Lichtquelle abgestrahlte räumlich modulierte Licht innerhalb eines Projektionswinkelbereiches vor das Leuchtmodul zu projizieren, wobei die Ablenkeinheit dazu eingerichtet ist, ein Ablenksteuersignal zu empfangen und das von der Lichtquelle abgestrahlte räumlich modulierte Licht in Abhängigkeit von dem Ablenksteuersignal zu manipulieren, sodass die Projektion des von der Lichtquelle abgestrahlten räumlich modulierten Lichtes vor das Leuchtmodul mit einem Verschiebungswinkel innerhalb des Projektionswinkelbereiches verschiebbar ist.

Weiters betrifft die Erfindung ein Kraftfahrzeug.

Außerdem betrifft die Erfindung ein Verfahren zum Betreiben eines Leuchtmoduls für eine Kraftfahrzeugleuchte, wobei das Leuchtmodul eine Lichtquelle, eine Projektionseinheit, eine Ablenkeinheit, sowie eine Steuereinheit umfasst, wobei die Lichtquelle dazu eingerichtet ist, ein Lichtsteuersignal zu empfangen und in Abhängigkeit von dem Lichtsteuersignal räumlich moduliertes Licht abzustrahlen, wobei die Projektionseinheit dazu eingerichtet ist, das von der Lichtquelle abgestrahlte räumlich modulierte Licht innerhalb eines Projektionswinkelbereiches vor das Leuchtmodul zu projizieren, wobei die Ablenkeinheit dazu eingerichtet ist, ein Ablenksteuersignal zu empfangen und das von der Lichtquelle abgestrahlte räumlich modulierte Licht in Abhängigkeit von dem Ablenksteuersignal zu manipulieren, sodass die Projektion des von der Lichtquelle abgestrahlten räumlich modulierten Lichtes vor das Leuchtmodul mit einem Verschiebungswinkel innerhalb des Projektionswinkelbereiches verschiebbar ist.

Aktuelle Leuchtmodule bzw. Lichtsysteme, besonders auf dem Gebiet der Kraftfahrzeugleuchten, erfordern immer mehr die Möglichkeit ein Lichtbild zu generieren, welches hochadaptiv an bestimmte Anforderungen angepasst werden kann. Um solche Leuchtmodule zu schaffen, sind in erster Linie Lichtsysteme bekannt geworden, welche ein segmentiertes Lichtbild bzw. ein räumlich moduliertes Licht projizieren bzw. generieren. Damit kann abhängig von bestimmten Anforderungen das generierte Lichtbild adaptiert werden. Derartige Anforderungen können auf die Fahrsituation bezogen sein. So ist es aus fahrsicherheitstechnischen Gründen vorteilhaft, wenn Leuchtmodule für Kraftfahrzeugleuchten den Bereich vor den Kraftfahrzeugleuchten derart beleuchten, dass eine optimale Ausleuchtung für den Fahrer entsteht, ohne andere Verkehrsteilnehmer zu blenden. Weiters sollen derartige Leuchtmodule als optische Anzeigen für Fahrer oder andere Verkehrsteilnehmer dienen. Daher können die genannten Anforderungen auf die Informationsdarstellung für den Fahrer des Fahrzeuges oder auf die Informationsdarstellung für andere Verkehrsteilnehmer bezogen sein. Diese optischen Anzeigen umfassen beispielsweise verschiedenste Symbole, welche generiert und dargestellt werden können.

Um die Freiheiten in der Adaption des segmentierten Lichtbildes bzw. des räumlich moduliertes Lichtbild weiter zu erhöhen, sind Ablenkeinheiten bekannt geworden, welche zusätzlich das abgestrahlte räumlich modulierte Licht manipulieren, sodass das resultierende Lichtbild verschoben werden kann.

Durch eine Verschiebung des generierten Lichtbildes kann die beleuchtbare Fläche erweitert werden. Insbesondere bei einer ausreichend schnellen und oszillierenden Verschiebung kann die Anzahl der Lichtsegmente eines projizierten räumlich modulierten Lichtes virtuell erhöht werden.

Wenngleich damit mehr Freiheiten in der Adaption des generierten Lichtbildes gegeben sind, steigt die Komplexität derartiger Leuchtmodule immens an. Gleichzeitig sollen solche Leuchtmodule, insbesondere solche Leuchtmodule für Kraftfahrzeugleuchten, möglichst kostengünstig und robust in ihrer Ansteuerung sein. Eine kompakte und zeitlich stabile Form der Ansteuerung von Lichtquelle und Ablenkeinheit ist derzeit nicht bekannt.

Es ist eine Aufgabe der Erfindung ein Leuchtmodul für eine Kraftfahrzeugleuchte, umfassend die genannten Elemente, zu schaffen, welches den obigen Forderungen gerecht wird.

Die Aufgabe der Erfindung wird mit einem Leuchtmodul der oben angegebenen Art gelöst, bei dem die Steuereinheit dazu eingerichtet ist, ein Eingangssignal zu empfangen, auszuwerten, und auf Grundlage dessen das Lichtsteuersignal an die Lichtquelle abzugeben, wobei das Eingangssignal einen ersten Lichtdatenblock umfasst, der zumindest teilweise in einem ersten Zeitbereich repräsentativ für das abgestrahlte räumlich modulierte Licht der Lichtquelle ist und in diesem ersten Lichtdatenblock erste Ablenkdaten enthalten sind, welche im selben ersten Zeitbereich repräsentativ für einen ersten Verschiebungswinkel sind, mit welchem im ersten Zeitbereich die Projektion des von der Lichtquelle abgestrahlten räumlich modulierten Lichtes vor das Leuchtmodul, innerhalb des Projektionswinkelbereiches verschiebbar ist.

Durch die Kopplung der Ablenkdaten im entsprechenden Lichtdatenblock können im Wesentlichen zu jedem Zeitpunkt das räumlich modulierte Licht und ein Verschiebungswinkel der Projektion des räumlich modulierten Lichtes innerhalb des Projektionswinkelbereiches miteinander verbunden werden. Dies erlaubt in weiterer Folge eine einfache und synchrone Ansteuerung von Lichtquelle und Ablenkeinheit.

Der Verschiebungswinkel wird gemessen an der Verschiebung in Bezug auf eine Neutralposition der Projektion des von der Lichtquelle abgestrahlten räumlich modulierten Lichtes innerhalb des Projektionswinkelbereiches, wobei der Verschiebungswinkel in dieser Neutralposition 0° beträgt. Bevorzugt ist der Verschiebungswinkel kleiner als die größte Winkelabmessung einer Projektion eines einzelnen Lichtsegmentes des räumlich modulierten Lichtes. Besonders bevorzugt kann der Verschiebungswinkel zwischen -2° und +2° betragen.

Der Projektionswinkelbereich wird durch die Apertur der Projektionseinheit bestimmt. Also entspricht der Projektionswinkelbereich dem maximal möglichen Abstrahlkegel der Projektionseinheit. Ein solcher Abstrahlkegel bezieht sich auf einen Kegel im mathematischen Sinne, wobei auch alle Untervarianten davon mitumfasst sein können. Untervarianten sind beispielsweise Pyramidenkegel oder Kegelstümpfe. Eine "Verschiebung der Projektion innerhalb des Projektionswinkelbereiches" meint also die Verschiebung der Projektion im möglichen Abstrahlkegel, also im Winkelraum, der sich durch die Projektionseinheit ergibt. Der Projektionswinkelbereich besitzt bevorzugt seine größte Ausdehnung in der Horizontalen und deckt dabei bevorzugt einen horizontalen Winkelbereich von maximal 50° ab. Der Projektionswinkelbereich besitzt eine weitere Ausdehnung in der Vertikalen und deckt dabei bevorzugt einen vertikalen Winkelbereich von maximal 20° ab.

Im Rahmen der vorliegenden Patentanmeldung sei mit dem Begriff "Einheit" alleine oder auch in einer Komposition, wie in "Projektionseinheit", "Ablenkeinheit" oder "Steuereinheit", nicht zwingend ein einzelnes Element zu verstehen. Der Begriff kann auch mehrere Elemente, Baugruppen, Bausteine, Komponenten oder Kombinationen davon umfassen.

Begriffe wie "aufweisen", "beinhalten", "umfassen" und "enthalten" können als Synonym untereinander verstanden werden.

Unter einem "räumlich modulierten Licht" wird ein Lichtbündel verstanden, welches in zumindest einer Ebene senkrecht zur Lichtausbreitungsrichtung des Lichtbündels mindestens zwei Lichtsegmente aufweist, welche in Abhängigkeit bzw. auf Grundlage von dem Lichtsteuersignal zueinander unterschiedliche Lichtintensitäten aufweisen. Es sind bereits verschiedenste Techniken bekannt geworden, um ein derartiges "räumlich moduliertes Licht" zu generieren. Dazu gehört insbesondere die flächenbasierte Modulation mittels LEDs (Licht emittierende Dioden) angeordnet in einer Matrix, die flächenbasierte Modulation von Licht mittels eines LCD (Liquid Crystal Display), oder die flächenbasierte Modulation von Licht mittels DLP (Digital light processing) bzw. DMD (Digital Mirror Device). Alternativ dazu sind auch Lichtstrahl-Modulationstechniken bekannt geworden, also scannende Systeme, die Lichtstrahlen oder Lichtbündel mit einer für das menschliche Auge nicht wahrnehmbaren Frequenz auf einen Bereich scannen, sodass frei variierbare Lichtbilder entstehen. Derartige Systeme zur flächenbasierten Modulation und zur Lichtstrahl-Modulation werden im Rahmen dieser Patentanmeldung kurz als "Lichtquelle" bezeichnet. Die heute bekannten Lichtquellen erlauben es bereits, räumlich moduliertes Licht abzustrahlen, welches mehrere 1000 individuell schaltbare und dimmbare Lichtsegmente aufweist. Die Lichtquelle generiert bevorzugt räumlich moduliertes Licht mittels flächenbasierter Modulation, wobei das räumlich modulierte Licht in zumindest einer Ebene senkrecht zur Lichtausbreitungsrichtung des räumlich modulierte Lichts mehr als 1000 Lichtsegmente aufweist.

Mit dem Ausdruck "repräsentativ" ist gemeint, dass ein direkter Zusammenhang besteht und genannte Daten direkt einen bestimmten Zustand beschreiben. Alternative Begriffe sind demnach "charakterisierend" oder "beschreibend".

Besonders vorteilhaft kann es sein, wenn die Steuereinheit dazu eingerichtet ist ein erstes Lichtsteuersignal sowie ein erstes Ablenksteuersignal aus dem ersten Lichtdatenblock vom Eingangssignal zu extrahieren und das erste Ablenksteuersignal im ersten Zeitbereich an die Ablenkeinheit und das erste Lichtsteuersignal im ersten Zeitbereich an die Lichtquelle auszugeben, sodass die Projektion des räumlich modulierten Lichtes der Lichtquelle im ersten Zeitbereich um einen ersten Verschiebungswinkel verschoben wird, sobald das räumlich modulierte Licht im ersten Zeitbereich von der Lichtquelle abgestrahlt wird.

In einer alternativen Ausführungsform ist die Steuereinheit dazu eingerichtet, ein erstes Lichtsteuersignal sowie die ersten Ablenkdaten aus dem ersten Lichtdatenblock zu extrahieren und die ersten Ablenkdaten derart in das erste Lichtsteuersignal zu integrieren, sodass ein Teil des abgestrahlten räumlich modulierten Lichtes im ersten Zeitbereich Informationen über den ersten Verschiebungswinkel im selben ersten Zeitbereich enthält,
wobei das Leuchtmodul weiters einen Lichtaufnehmer aufweist, welcher dazu eingerichtet ist, den einen Teil des abgestrahlten räumlich modulierten Lichtes der Lichtquelle aufzunehmen, welcher Informationen über den ersten Verschiebungswinkel im ersten Zeitbereich enthält und ein darauf basierendes erstes Ablenksteuersignal an die Ablenkeinheit auszugeben, sodass die Projektion des räumlich modulierten Lichtes der Lichtquelle im ersten Zeitbereich um den ersten Verschiebungswinkel verschoben wird, sobald das räumlich modulierte Licht im ersten Zeitbereich von der Lichtquelle abgestrahlt wird.

Mit "sobald" ist in Zusammenhang der Erfindung gemeint, dass das räumlich modulierte Licht der Lichtquelle im Wesentlichen in jenem Zeitbereich abgestrahlt wird, in dem die Ablenkeinheit die Projektion des räumlich modulierten Lichtes der Lichtquelle um den zugeordneten Verschiebungswinkel verschieben kann. Dem Fachmann ist dabei bekannt, dass unter Umständen in der Praxis eine Steuerung Arbeitsschritte sequentiell abarbeiten muss und daher die Ausgabe des Ablenksteuersignals und die Ausgabe des Lichtsteuersignals nicht exakt zum selben Zeitpunkt erfolgen kann. Auch sind minimale Verzögerungen aufgrund von Laufzeitunterschieden oder anderen Einflüssen möglich. Wesentlich ist, dass das räumlich modulierte Licht der Lichtquelle, welches durch einen Teil des Lichtdatenblocks repräsentiert wird, in jenem Zeitbereich abgestrahlt wird, in dem die Projektion des räumlich modulierten Lichtes der Lichtquelle um den Verschiebungswinkel verschoben werden würde bzw. wird, wobei der Verschiebungswinkel durch die Ablenkdaten im entsprechenden Lichtdatenblock repräsentiert wird.

Es kann mit Vorteil vorgesehen sein, dass das Eingangssignal eine Vielzahl zeitlich aufeinanderfolgender Lichtdatenblöcke mit jeweils aufweisenden Ablenkdaten umfasst, womit eine Vielzahl zeitlich aufeinanderfolgender Zeitbereiche beschrieben werden, in welchen jeder der einzelnen Lichtdatenblöcke mit jeweils aufweisenden Ablenkdaten repräsentativ für das abgestrahlte räumlich modulierte Licht der Lichtquelle sowie für den Verschiebungswinkel im jeweiligen Zeitbereichs ist, wobei die Zeitdauer der jeweiligen Zeitbereiche im Wesentlichen gleich ist und zwischen 5ms und 50ms beträgt.

Dabei ist es insbesondere vorteilhaft, wenn jeder n-te Lichtdatenblock von der Vielzahl an zeitlich aufeinanderfolgenden Lichtdatenblöcken Ablenkdaten enthält, die zueinander gleich sind und n einer natürlichen Zahl größer 1 entspricht.

Mit "zueinander gleich" ist in diesem Fall gemeint, dass die zueinander gleichen Ablenkdaten einander derart ähneln, sodass diese für den gleichen bzw. identen Verschiebungswinkel der Projektion des räumlich modulierten Lichtes repräsentativ sind.

In einer sehr kompakten Ausführung ist es vorteilhaft, wenn das von der Lichtquelle abgestrahlte räumlich modulierte Licht eine Vielzahl an Lichtsegmenten umfasst und der erste Lichtdatenblock Intensitätswerte umfasst, welche die Lichtintensität von zumindest einem Teil der Vielzahl an Lichtsegmenten im ersten Zeitbereich beschreiben.

Dabei ist es besonders effizient, wenn die Intensitätswerte jeweils eine Bittiefe von 4 bis 32 Bit aufweisen und die ersten Ablenkdaten in zumindest einem Bit dieser Bittiefe integriert sind.

Alternativ kann vorgesehen sein, dass der erste Lichtdatenblock mehrere Kanäle aufweist und ein Kanal die ersten Ablenkdaten beinhaltet.

Bevorzugt weist der erste Lichtdatenblock zwei, besonders bevorzugt drei Kanäle auf.

Ein Kanal ist in diesem Zusammenhang ein Datenblock, welcher für einen bestimmten Teil, insbesondere einen Farbanteil zumindest eines Teils des räumlich modulierten Lichtes repräsentativ ist.

In einem Aspekt betrifft die Erfindung ein Kraftfahrzeug mit einem Leuchtmodul nach einem der vorangegangen Ansprüche.

In diesem Aspekt kann es besonders vorteilhaft sein, wenn das Kraftfahrzeug zumindest ein zweites Leuchtmodul aufweist, welches baugleich dem einen Leuchtmodul ist und die Steuereinheit des zweiten Leuchtmodul dasselbe Eingangssignal wie die Steuereinheit des einen Leuchtmoduls empfängt und der erste Lichtdatenblock weiters eine Identifikation umfasst, die dem einen Leuchtmodul oder dem zweiten Leuchtmodul eindeutig zuordenbar ist.

Die Aufgabe wird auch mit einem Verfahren der eingangs genannten Art gelöst, wobei das Verfahren folgende Schritte aufweist:
a) Bereitstellen eines ersten Lichtdatenblocks welcher zumindest teilweise in einem ersten Zeitbereich repräsentativ für das abgestrahlte räumlich modulierte Licht der Lichtquelle ist,
b) Bereitstellen von ersten Ablenkdaten welche im selben ersten Zeitbereich repräsentativ für den ersten Verschiebungswinkel sind,
c) Integrieren der ersten Ablenkdaten in den ersten Lichtdatenblock,
d) Übertragen des ersten Lichtdatenblocks samt integrierter erster Ablenkdaten über ein Eingangssignal an die Steuereinheit,
e) Auswerten des Eingangssignals durch die Steuereinheit,
f) Bereitstellen eines ersten Lichtsteuersignals an die Lichtquelle im ersten Zeitbereich gemäß des ersten Lichtdatenblocks,
g) Bereitstellen eines ersten Ablenksteuersignals an die Ablenkeinheit im selben ersten Zeitbereich gemäß der im ersten Lichtdatenblock integrierten ersten Ablenkdaten,

Dabei kann es besonders vorteilhaft sein, wenn im Schritt e) die Steuereinheit ein erstes Lichtsteuersignal sowie ein erstes Ablenksteuersignal aus dem ersten Lichtdatenblock extrahiert und im Schritt f) die Steuereinheit das erste Lichtsteuersignal im ersten Zeitbereich an die Lichtquelle ausgibt und im Schritt g) die Steuereinheit das erste Ablenksteuersignal im selben ersten Zeitbereich an die Ablenkeinheit ausgibt, sodass die Projektion des räumlich modulierten Lichts der Lichtquelle im ersten Zeitbereich um den ersten Verschiebungswinkel verschoben wird, sobald das räumlich modulierte Licht im ersten Zeitbereich von der Lichtquelle abgestrahlt wird.

Alternativ dazu kann vorgesehen sein wenn im Schritt e) die Steuereinheit das erste Lichtsteuersignal sowie das ersten Ablenkdaten aus dem ersten Lichtdatenblock extrahiert und vor Schritt f) die Steuereinheit die ersten Ablenkdaten derart in das erste Lichtsteuersignal integriert, sodass ein Teil des abgestrahlten räumlich modulierten Lichtes im ersten Zeitbereich Informationen über den ersten Verschiebungswinkel im selben ersten Zeitbereich enthält,
wobei weiters das Leuchtmodul einen Lichtaufnehmer aufweist, welcher dazu eingerichtet ist vor dem Schritt g) den zumindest einen Teil des abgestrahlten räumlich modulierten Lichtes der Lichtquelle im ersten Zeitbereich aufzunehmen, um sodann im Schritt g) ein darauf basierendes erstes Ablenksteuersignal im ersten Zeitbereich an die Ablenkeinheit abzugeben, sodass die Projektion des räumlich modulierten Lichtes der Lichtquelle im ersten Zeitbereich um den ersten Verschiebungswinkel verschoben wird, sobald das räumlich modulierte Licht im ersten Zeitbereich von der Lichtquelle abgestrahlt wird.

Die Erfindung samt weiteren Vorteilen wird im Folgenden an Hand beispielhafter Ausführungsformen näher erläutert, die in Zeichnungen veranschaulicht sind. Die Zeichnungen zeigen in
Fig. 1 ein Leuchtmodul gemäß der Erfindung,
Fig. 2a bis Fig. 2c Ausformungen des Eingangssignals gemäß der Erfindung,
Fig. 3a bis Fig. 3d einen zeitlichen Zusammenhang,
Fig. 4 eine erste Ausführungsform des Leuchtmoduls,
Fig. 5 eine zweite Ausführungsform des Leuchtmoduls,
Fig. 6 ein Kraftfahrzeug,
Fig. 7 ein Verfahren zum Betreiben des in Fig. 1 beschriebenen Leuchtmoduls.

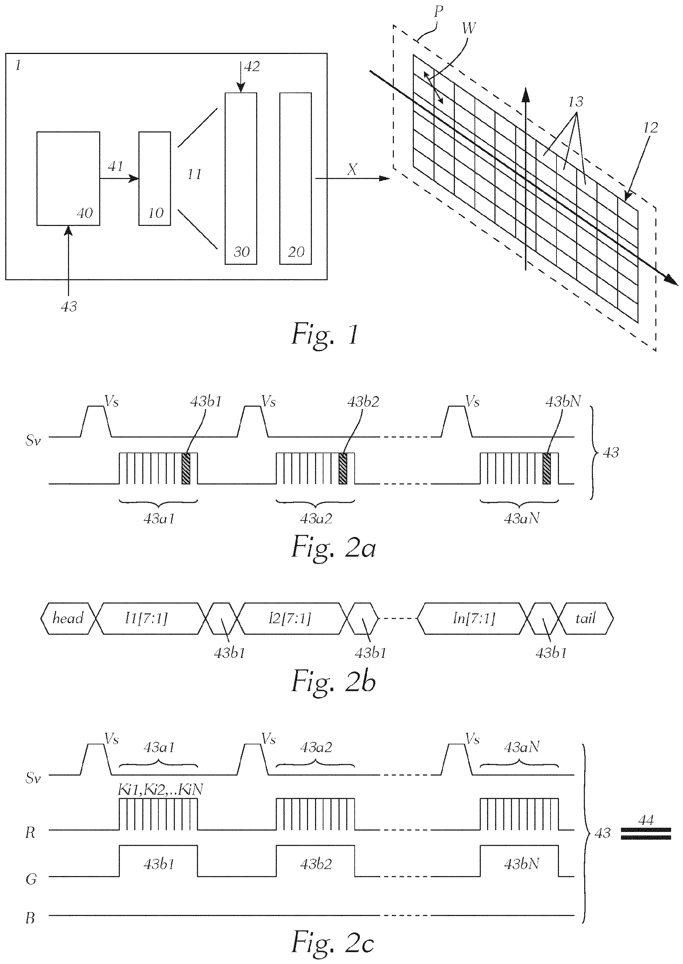

In den Figuren Fig. 1 bis Fig. 7 werden nun Ausführungsbeispiele und die Funktionsweise der Erfindung näher erläutert. Die Figuren sind nur beispielhaft und in vereinfachter Darstellungen zu sehen, um die wesentlichen Komponenten besser beschreiben zu können. Für den Fachmann ist klar, dass Ausformungen und Merkmale der Erfindung auch in geeigneter Weise untereinander kombinierbar sind. Beispielsweise wird die Erfindung in erster Linie anhand des ersten Lichtdatenblocks und der darin enthaltenen ersten Ablenkdaten beschrieben. Jedoch ist klar, dass Beschreibungsteile, sofern anwendbar, in gleicher Form auch für eine Vielzahl zeitlich aufeinanderfolgender Lichtdatenblöcke mit jeweils enthaltenen Ablenkdaten gelten kann.

Fig. 1 zeigt ein Blockschaltbild des erfindungsgemäßen Leuchtmoduls 1 samt einer perspektivischen Darstellung der Projektion 12 des räumlich modulierten Lichtes 11 innerhalb des Projektionswinkelbereiches P. Das Leuchtmodul 1 umfasst eine Lichtquelle 10, eine Projektionseinheit 20, eine Ablenkeinheit 30, sowie eine Steuereinheit 40. Die Lichtquelle 10 ist dazu eingerichtet, ein Lichtsteuersignal 41 empfangen und in Abhängigkeit von dem Lichtsteuersignal 41 räumlich moduliertes Licht 11 abstrahlen.

Die Lichtquelle 10 kann dabei mehrere Elemente umfassen. Beispielsweise umfasst die Lichtquelle 10 ein Licht emittierendes Element und einen nachgeordneten Flächenmodulator, wie beispielsweise einen LCD, DMD bzw. DLP, um in weiterer Folge in Abhängigkeit von dem Lichtsteuersignal 41 ein räumlich moduliertes Licht 11 abzustrahlen. Optionale zusätzliche Elemente wie optische Linsen oder Reflektoren zwischen Lichtquelle 10 und Ablenkeinheit 30 sind der Übersicht halber nicht gezeigt, können aber im Bedarfsfall installiert sein. Bevorzugt umfasst die Lichtquelle 10 ein Array mit mindestens zwei LEDs (Licht emittierende Dioden), wobei jede LED individuell steuerbar ist, um in weiterer Folge in Abhängigkeit von dem Lichtsteuersignal 41 räumlich moduliertes Licht 11 abzustrahlen. Weiters kann die Lichtquelle 10 eine Kombination aus einem Licht emittierenden Element, einem Kollimator und einem Lichtstrahlmodulator umfassen, welcher in scannender Form kollimiertes Licht des Licht emittierenden Elements, mit einer für das menschliche Auge nicht wahrnehmbaren Frequenz auf einen Bereich scannt, um in weiterer Folge in Abhängigkeit von dem Lichtsteuersignal 41 räumlich moduliertes Licht 11 abzustrahlen. Der Bereich kann ein Lichtkonversionselement umfassen.

Dem Fachmann sind verschiedenste Möglichkeiten bekannt Licht räumlich zu modulieren. Wesentlich für die Erfindung ist, dass von der Lichtquelle 10 in Abhängigkeit bzw. auf Grundlage von dem Lichtsteuersignal 41 ein Lichtbündel ausgeht, welches in zumindest einer Ebene senkrecht zur Lichtausbreitungsrichtung des Lichtbündels mindestens zwei Lichtsegmente aufweist, welche zueinander unterschiedliche Lichtintensitäten aufweisen.

Dieses räumlich modulierte Licht 11 wird von einer Projektionseinheit 20 innerhalb eines Projektionswinkelbereiches P vor das Leuchtmodul 1 projiziert. Dem Fachmann ist klar, dass mit Projektion die Abbildung des räumlich modulierten Lichtes 11 vor das Leuchtmodul gemeint ist, um so eine segmentierte Lichtverteilung - also eine Projektion 12 mit Lichtsegmenten 13 - zu bilden. Eine solche Projektionseinheit 20 umfasst üblicherweise mehrere optische Elemente, insbesondere Linsen. Der Übersicht halber sind diese mehreren optischen Elemente nicht gezeigt. Im vorliegenden Fall umfasst die Projektion 12 ein Array an Lichtsegmenten 13 mit 6 Reihen und 11 Spalten. Bevorzugt entspricht die Projektion 12 einer Abbildung eines LED-Arrays, welches, wie oben beschrieben, räumlich moduliertes Licht 11 abstrahlt. Wenngleich lediglich 66 Lichtsegmente 13 gezeigt sind, kann die Lichtquelle 10 derart ausgestaltet sein, sodass innerhalb des Projektionswinkelbereiches P mehrere tausend Lichtsegmente 13 projiziert werden.

Des Weiteren ist eine Ablenkeinheit 30 vorgesehen, welche der Lichtquelle 11 im Strahlengang des abgestrahlten räumlich modulierten Lichtes 11 nachgeordnet ist. Bevorzugt ist die Ablenkeinheit 30 im Strahlengang des abgestrahlten räumlich modulierten Lichtes 11 zwischen der Lichtquelle 10 und zumindest einem Teil der Projektionseinheit 20 angeordnet. Mit zumindest einem Teil der Projektionseinheit 20 sei gemeint, dass diese wie oben erläutert aus mehreren optischen Elementen bestehen kann und damit die Ablenkeinheit 30 zwischen den mehreren optischen Elementen der Projektionseinheit 20 angeordnet sein kann. Diese Ablenkeinheit 30 kann ein Ablenksteuersignal 42 empfangen und das von der Lichtquelle 10 abgestrahlte räumlich modulierte Licht 11 in Abhängigkeit von dem Ablenksteuersignal 42 manipulieren, sodass die Projektion 12 des von der Lichtquelle abgestrahlten räumlich modulierten Lichtes vor das Leuchtmodul 1 mit einem Verschiebungswinkel W innerhalb des Projektionswinkelbereiches P verschiebbar ist.

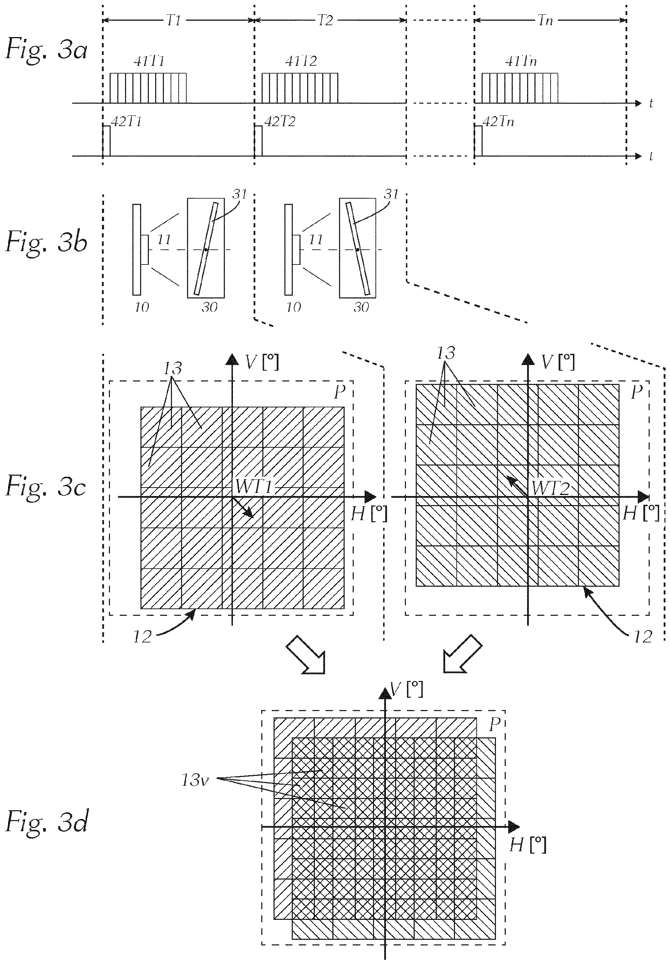

Die Ablenkeinheit 30 kann ein Glasplättchen 31 (gezeigt in Fig. 3b) umfassen, welches aus einem Material besteht, das transparent für das abgestrahlte räumlich modulierte Licht 11 der Lichtquelle 10 ist. Dieses Glasplättchen kann als planparallele Platte ausgeführt sein und durch eine entsprechende mechanische Aufhängung um zumindest eine Schwenkachse schwenkbar gelagert sein, wobei diese Schwenkachse bevorzugt senkrecht zur Lichtausbreitungsrichtung des von der Lichtquelle 10 abgestrahlten räumlich modulierten Lichtes 11 steht. Beispielsweise kann die Ablenkeinheit 30 weiters einen nicht gezeigten elektromagnetischen Aktuator aufweisen, welcher das Glasplättchen abhängig vom Ablenksteuersignal 42 um die zumindest eine Schwenkachse schwenkt. Durch die Schwenkung kann der Eintrittswinkel des räumlich modulierten Lichtes 11 in das Glasplättchen geändert werden, womit entsprechend der Brechung das räumlich modulierte Licht 11 beim Lichtdurchtritt durch das Glasplättchen parallel zur Lichtausbreitungsrichtung des räumlich modulierten Lichtes 11 verschoben werden kann, wodurch letztendlich das abgestrahlte räumlich modulierte Licht 11 in Abhängigkeit von dem Ablenksteuersignal 42 derart manipuliert werden kann, sodass die Projektion 12 des von der Lichtquelle abgestrahlten räumlich modulierten Lichtes vor das Leuchtmodul 1 mit einem Verschiebungswinkel W innerhalb des Projektionswinkelbereiches P verschoben wird.

Dem Fachmann sind verschiedenste Möglichkeiten bekannt um eine Ablenkeinheit 30 zu schaffen, welche das räumlich modulierte Licht 11 der Lichtquelle 10 in Abhängigkeit des Ablenksteuersignals 42 derart zu manipulieren vermag, sodass die Projektion 12 des von der Lichtquelle 10 abgestrahlten räumlich modulierten Lichtes 11 vor das Leuchtmodul 1 mit einem Verschiebungswinkel W innerhalb des Projektionswinkelbereiches P verschiebbar ist. Beispielsweise sind auch Prismen denkbar, welche durch laterale Positionsänderung bezogen auf die Lichtausbreitungsrichtung des räumlich modulierten Lichtes 11 und damit ebenfalls durch Brechung die Projektion des von der Lichtquelle abgestrahlten räumlich modulierten Lichtes vor das Leuchtmodul 1 innerhalb des Projektionswinkelbereiches P verschieben. Möglich sind auch reflektive Lösungen einer Ablenkeinheit 30.

Wesentlich für die Erfindung ist, dass die Ablenkeinheit 30 in Abhängigkeit bzw. auf Grundlage des Ablenksteuersignals 42 die Projektion 12 des von der Lichtquelle abgestrahlten räumlich modulierten Lichtes 11 vor das Leuchtmodul 1 innerhalb des Projektionswinkelbereiches P verschieben kann.

Durch die Verschiebung der Projektion 12 innerhalb des Projektionswinkelbereiches P wird, wie in Fig. 3c gezeigt, die beleuchtbare Fläche innerhalb des Projektionswinkelbereiches P erweitert. Insbesondere können bei einer ausreichend schnellen und oszillierenden Verschiebung virtuelle Lichtsegmente 13v des projizierten räumlich modulierten Lichtes 11 geschaffen werden, womit die Freiheiten in der Adaption der Projektion 12 des räumlich modulierten Lichtes 11 weiter erhöht werden. Mit ausreichend schnell kann in diesem Zusammenhang eine oszillierende Verschiebung mit mindestens 60 Hz gemeint sein. Diese Möglichkeit wird anhand der Fig. 3a bis Fig. 3d weiter unten näher beschrieben.

Nun zeigt Fig. 1 weiters die Steuereinheit 40, welche erfindungsgemäß dazu eingerichtet ist das Eingangssignal 43 zu empfangen, auszuwerten und auf Grundlage dessen das Lichtsteuersignal 41 an die Lichtquelle auszugeben. Das Eingangssignal 43 wird nun anhand der Fig. 2a und Fig. 2b näher beschrieben.

Fig. 2a zeigt einen beispielhaften Signalverlauf des Eingangssignals 43 welches ein Synchronisationssignal Sv mit Synchronisationsimpulsen Vs und zeitlich dazwischen liegende Lichtdatenblöcke 43a1, 43a2, 43aN aufweist. Im ersten Lichtdatenblock 43a1 sind erste Ablenkdaten 43b1 enthalten und im zweiten Lichtdatenblock 43a2 sind zweite Ablenkdaten 43b2 enthalten. Auch in jedem weiteren Lichtdatenblock 43aN können weitere Ablenkdaten 43bN enthalten sein. Jeder Lichtdatenblock 43a1, 43a2, 43aN umfasst typischerweise einen binären Datenstrom, wobei jeder binäre Datenstrom in seiner Summe als Lichtdatenblock, zeitlich zwischen zwei Synchronisationsimpulsen Vs, das von der Lichtquelle 10 abzustrahlende räumlich modulierte Licht 11 in aufeinanderfolgenden Zeitbereichen T1, T2, Tn (siehe Fig. 3a) beschreiben kann. Damit umfasst das Eingangssignal 43 einen ersten Lichtdatenblock 43a1, der zumindest teilweise in einem ersten Zeitbereich T1 repräsentativ für das abgestrahlte räumlich modulierte Licht 11 der Lichtquelle 10 ist. "Zumindest teilweise", da ein Lichtdatenblock 43a1, 43a2, 43aN weitere Daten, beispielsweise Metadaten umfassen kann. Das Eingangssignal 43 kann somit, wie gezeigt, eine Zusammenfassung mehrerer Signale umfassen, welche gemeinsam von der Steuereinheit 40 empfangen werden können.

Weiters ist ersichtlich, dass die ersten Ablenkdaten 43b1 erfindungsgemäß im ersten Lichtdatenblock 43a1 enthalten sind. Da ein Lichtdatenblock 43a1, 43a2, 43aN typischerweise einen binären Datenstrom umfasst, liegen bevorzugt die Ablenkdaten 43b1, 43b2, 43bN ebenso als binäre Daten vor. Diese können somit im ersten Lichtdatenblock 43a1 einen ersten Verschiebungswinkel WT1 beschreiben, mit dem die Projektion 12 des räumlich modulierten Lichtes vor das Leuchtmodul 1 innerhalb des Projektionswinkelbereiches P verschoben werden kann. Beispielsweise liegen die Ablenkdaten 43b1, 43b2, 43bN als binäre Daten vor, wobei mit einem Bitwert gleich 0 einen Verschiebungswinkel von -2° und mit einem Bitwert gleich 1 ein Verschiebungswinkel von +2° repräsentiert werden kann. Bezogen auf die Neutralposition der Projektion 12 des räumlich modulierten Lichtes 11 sind auch asymmetrische Verschiebungswinkel denkbar. Weiters sind bei Bedarf auch größere Binärzahlen möglich. Beispielsweise repräsentiert ein Binärwert gleich 0011 einen Verschiebungswinkel von +1,5° und ein Binärwert gleich 1010 einen Verschiebungswinkel von -1°.

Damit sind Teile des ersten Lichtdatenblocks 43a1 in einem ersten Zeitbereich T1 repräsentativ für das abgestrahlte räumlich modulierte Licht 11 der Lichtquelle 10. Weiters sind die im ersten Lichtdatenblock 43a1 enthaltenen ersten Ablenkdaten 43b1 im selben ersten Zeitbereich T1 repräsentativ für den ersten Verschiebungswinkel WT1, mit dem im ersten Zeitbereich T1 die Projektion 12 des von der Lichtquelle 10 abgestrahlten räumlich modulierten Lichtes 11 vor das Leuchtmodul 1 innerhalb des Projektionswinkelbereiches P verschoben wird.

Dabei soll Fig. 2a nur schematisch zeigen, dass die jeweiligen Ablenkdaten 43b1, 43b2, 43bN in den jeweiligen Lichtdatenblöcken 43a1, 43a2, 43aN enthalten sind. Die gezeigte Darstellung der jeweiligen Ablenkdaten 43b1, 43b2, 43bN in einem bestimmten Abschnitt der jeweiligen Lichtdatenblöcken 43a1, 43a2, 43aN ist nicht auf die gezeigte Variante beschränkt. Wie in den nachfolgenden Figurenbeschreibungen erläutert, können die Ablenkdaten 43b1, 43b2, 43bN auch regelmäßig und redundant innerhalb der jeweiligen Lichtdanteblöcke 43a1, 43a2, 43aN integriert sein.

Das Integrieren der ersten Ablenkdaten 43b1 in den ersten Lichtdatenblock 43a1 wird später anhand der Fig. 2c näher erläutert.

Unabhängig von der eingangs beschriebenen Art und Weise, wie das räumlich modulierte Licht 11 bzw. eine Vielzahl an Lichtsegmenten 13 generiert wird, wird ein solches räumlich moduliertes Licht 11 typischerweise anhand von Bilddaten beschrieben. Die Bilddaten können vom oben beschriebenen binären Datenstrom des Lichtdatenblocks 43a1, 43a2, 43aN umfasst sein, wobei die Bilddaten zumindest Informationen über die Intensität eines jeden Lichtsegments 13 enthalten. Diese Bilddaten können also Intensitätswerte I1, I2, In umfassen.

Damit umfasst das von der Lichtquelle 10 abgestrahlte räumlich modulierte Licht 11 (bzw. deren Projektion 12) eine Vielzahl an Lichtsegmenten 13, wobei der erste Lichtdatenblock 43a1 Intensitätswerte I1, I2, In umfasst, welche Intensitätswerte I1, I2, In die Lichtintensität von zumindest einem Teil der Vielzahl an Lichtsegmenten 13 im ersten Zeitbereich T1 beschreiben.

Die Intensitätswerte I1, I2, In können jeweils eine Bittiefe von 4 bis 32 Bit aufweisen. Die Bittiefe gibt damit an, mit wie vielen Abstufungen die Intensität eines einzelnen Lichtsegments 13 der Projektion 12 des räumlich modulierten Lichtes 11 beschrieben werden kann. Eine Bittiefe von 8 Bit erlaubt demnach 2^8 unterschiedliche Abstufungen in der Lichtintensität. Bevorzugt beträgt diese Bittiefe genau 8 Bit.

Wie in Fig. 2b gezeigt, können die ersten Ablenkdaten 43b1 in zumindest einem Bit dieser Bittiefe integriert sein. Damit reduziert sich die Anzahl der möglichen Abstufungen für die Lichtintensität zumindest eines einzelnen Lichtsegments 13 des räumlich modulierten Lichtes 11 im ersten Lichtdatenblock 43a1, jedoch sind somit die ersten Ablenkdaten 43b1, unabhängig von sonstigen Einflüssen mit dem ersten Lichtdatenblock 43a1verbunden, womit eine robuste und kompakte Ansteuerung der Lichtquelle 10 und der Ablenkeinheit 30 im entsprechenden Moment ermöglicht wird.

Es ist möglich, dass lediglich ein Intensitätswert I1 des ersten Lichtdatenblocks 43a1 in seiner Bittiefe reduziert wird, sodass die ersten Ablenkdaten 43b1 im entsprechenden ersten Lichtdatenblock 43a1 integriert werden können und somit enthalten sind. Bevorzugt werden alle Intensitätswerte I1, I2, In in ihrer Bittiefe reduziert, sodass jeder einzelne Intensitätswert I1, I2, In des ersten Lichtdatenblocks 43a1 die ersten Ablenkdaten 43b1 enthält, welche im selben ersten Zeitbereich T1 repräsentativ für den ersten Verschiebungswinkel W1 sind, mit dem die Projektion 12, des von der Lichtquelle 10 abgestrahlten räumlich modulierten Lichtes 11 vor das Leuchtmodul 10 innerhalb des Projektionswinkelbereiches P verschoben wird.

Wie in Fig. 2c gezeigt kann auch vorgesehen sein, dass das Eingangssignal 43 einen ersten Lichtdatenblock 43a1 aufweist, welcher mehrere Kanäle R, G, B umfasst. Diese Kanäle R, G, B können Teil der oben beschriebenen Bilddaten sein, wobei jeder Kanal R, G, B mehrere Kanalintensitätswerte Ki1, Ki2, KiN oder Metadaten umfassen kann, welche Kanalintensitätswerte Ki1, Ki2, KiN eine Farbintensität von zumindest einem Teil der Vielzahl an Lichtsegmenten 13 beschreibt. Beinhaltet ein Kanal Metadaten, so können diese Eigenschaften des jeweiligen Lichtdatenblocks aufweisen. Ein derartiger Aufbau eines Lichtdatenblocks kann aufgrund von genormten Schnittstellen, wie dies bei der Videosignalübertragungen üblich ist, vorgesehen sein. Wie bei einem Leuchtmodul für ein Kraftfahrzeug üblich, kann die Projektion 12 des räumlich modulierten Lichts 11 für Beleuchtungszwecke lediglich weißes Licht umfassen, womit beim Einsatz einer entsprechenden Lichtquelle 10 ein einzelner Kanal R, G, B mit entsprechenden Kanalintensitätswerten Ki1, Ki2, KiN ausreichend ist. Vorteilhafterweise kann also eine kompakte Ansteuerung der Lichtquelle 10 und der Ablenkeinheit 30 geschaffen werden, wenn der erste Lichtdatenblock 43a1 mehrere Kanäle R, G, B aufweist und zumindest ein Kanal R, G, B die ersten Ablenkdaten 43b1 beinhaltet. Beispielsweise weist ein Kanal R zur Gänze den ersten Lichtdatenblock 43a1, insbesondere alle Lichtdatenblöcke 43a1, 43a2, 43aN einer Vielzahl zeitlich aufeinanderfolgender Lichtdatenblöcke 43a1, 43a2, 43aN auf und ein zweiter Kanal G zur Gänze die ersten Ablenkdaten 43b1, insbesondere alle, der in den Lichtdatenblöcken 43a1, 43a2, 43aN enthaltenen Ablenkdaten 43b1, 43b2, 43bN auf.

Nun zeigt Fig. 2c weiters, dass das Eingangssignal 43 zur kompakten Übertragung bekanntermaßen mittels einer Serialisierung in einen seriellen Datenstrang 44 transformiert werden kann. Damit kann die Anzahl an physischen Verbindungen (beispielsweise Kabeln) zur Steuereinheit 40 stark reduziert werden. Das Eingangssignal 43 weist hier beispielsweise ein Synchronisationssignal Sv mit Synchronisationsimpulsen Vs und zeitlich dazwischen liegende Lichtdatenblöcke 43a1, 43a2, 43aN auf, wobei die Lichtdatenblöcke 43a1, 43a2, 43aN jeweils drei Kanäle R, G, B aufweisen. Die ersten Ablenkdaten 43b1 können wie zuvor beschrieben entweder durch Reduktion der Bittiefe einzelner Intensitätswerte I1, I2, In bzw. Kanalintensitätswerte Ki1, Ki2, KiN oder zumindest teilweise in einen Kanal R, G, B integriert sein.

Das Eingangssignal 43, in Form eines seriellen Datenstranges 44, kann von der Steuereinheit 40 empfangen werden, wobei die Steuereinheit 40 beispielsweise mittels einer Deserialisierung die Bestandteile des Eingangssignals 43 wieder gewinnen kann.

Derartige Serialisierungen und Deserialisierungen sind insbesondere von Datenübertragungen via LVDS- oder GMSL-Schnittstellen bekannt.

Im Folgenden wird anhand der Fig. 3a bis Fig. 3d auf Details zu den Zeitbereichen T1, T2, Tn, insbesondere auf Details zum ersten Zeitbereich T1 eingegangen. Obwohl dies nun im Zuge der Beschreibung einer Ausführung näher erläutert wird, soll klar sein, dass die nachfolgenden Details auch für alle anderen Ausführungen gelten und anwendbar sind. Fig. 3a bis Fig. 3c beziehen sich auf dieselben Zeitbereiche T1, T2, Tn.

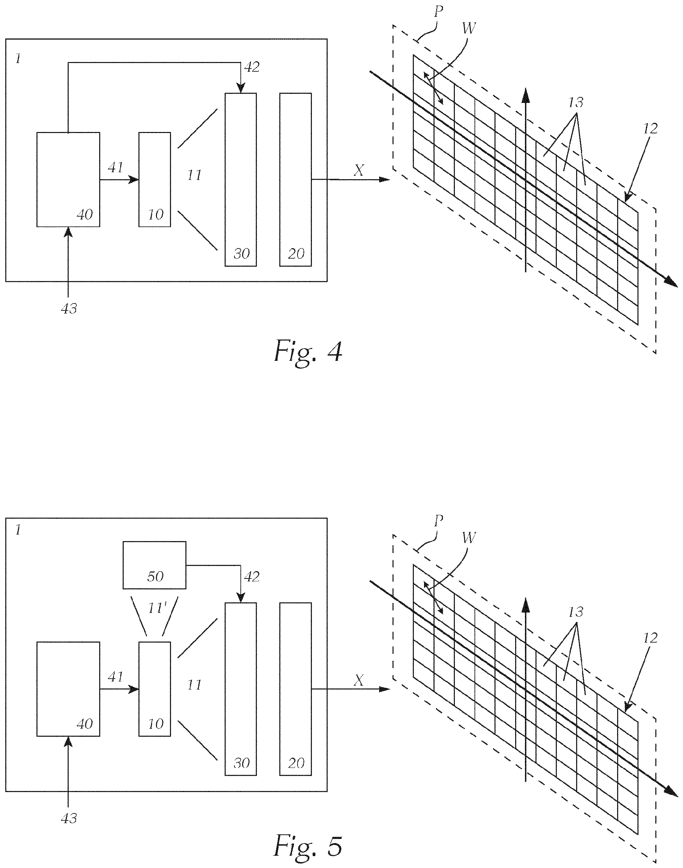

Der erste Zeitbereich T1 wird von einem ersten Startzeitpunkt T1s und einem zweiten Startzeitpunkt T2s begrenzt. Der erste Startzeitpunkt T1s kann von der Abgabe des ersten Lichtsteuersignals 41T1 durch das Steuergerät 40 an die Lichtquelle 10 oder von der Abgabe des ersten Ablenksteuersignals 42T1 durch das Steuergerät 40 (bzw. in einer Ausführung nach Fig. 5 durch einen Lichtaufnehmer 50) an die Ablenkeinheit 30 getriggert, also gestartet werden. Auch kann der erste Zeitbereich T1, bevorzugt alle Zeitbereiche T1, T2, Tn durch die im Synchronisationssignal Sv enthaltenen Synchronisationsimpulse Vs gestartet werden. Durch eine sequentiellen Ausgabe des ersten Lichtsteuersignals 41T1 nach dem ersten Ablenksteuersignal 42T1 kann vorgesehen sein, dass eine mögliche Zeitverzögerung eines Elements, beispielsweise der Ablenkeinheit 30 aufgrund mechanischer Trägheit kompensiert wird, womit die Projektion 12 des räumlich modulierten Lichtes 11 der Lichtquelle 10 genau dann manipuliert werden kann und damit um den ersten Verschiebungswinkel WT1 innerhalb des Projektionswinkelbereiches P verschoben wird, wenn im ersten Zeitbereich T1 das räumlich modulierte Licht 11 der Lichtquelle 10 abgestrahlt wird.

In gleicher Weise kann der Zeitbereich T1 durch die Abgabe eines zweiten Ablenksteuersignals 42T2 oder durch die Abgabe eines zweiten Lichtsteuersignals 41T2 beendet werden. Gleichzeitig kann der zweite Zeitbereich T2 durch die Abgabe eines zweiten Ablenksteuersignals 42T2 oder durch die Abgabe eines zweiten Lichtsteuersignals 41T2 gestartet werden.

Auch wenn die Abstrahlung des räumlich modulierten Lichtes 11 und die Manipulation des gleichen räumlich modulierten Lichtes 11 im ersten Zeitbereich T1 bevorzugt zeitgleich getriggert wird, ist es nicht ausgeschlossen, dass die Abstrahlung des räumlich modulierten Lichtes 11 und die Manipulation des gleichen räumlich modulierten Lichtes 11 innerhalb des ersten Zeitbereichs T1 zu unterschiedlichen Zeitpunkten getriggert wird. Dies kann in manchen Fällen gar wünschenswert sein, beispielsweise, um bestimmte Lichteffekte zu schaffen.

Nun sind in Fig. 3a aneinanderhängende Zeitbereiche T1, T2, Tn gezeigt. Jeder Zeitbereich T1, T2, Tn wird in diesem beispielhaften Verlauf von der Abgabe des jeweiligen Ablenksteuersignals 42T1, 42T2, 42Tn durch die Steuereinheit 40 an die Ablenkeinheit 30 gestartet bzw. beendet, wobei die Lichtquelle 10 in Abhängigkeit von dem Lichtsteuersignal 41T1, 41T2, 41Tn im jeweiligen Zeitbereich T1, T2, Tn ein räumlich moduliertes Licht 11 abstrahlt. Es versteht sich, dass damit das Lichtsteuersignal 41T1, 41T2, 41Tn im jeweiligen Zeitbereich T1, T2, Tn mit jenem Lichtdatenblock 43a1, 43a2, 43aN zusammenhängt, der im jeweiligen Zeitbereich T1, T2, Tn zumindest teilweise repräsentativ für das abgestrahlte räumlich modulierte Licht 11 der Lichtquelle 10 ist. Selbiges gilt für die im jeweiligen Lichtdatenblock 43a1, 43a2, 43aN enthaltenen Ablenkdaten 43b1, 43b2, 43bN und den davon abgeleiteten Ablenksteuersignalen 42T1, 42T2, 42Tn.

Fig. 3b zeigt nun schematisch den Zusammenhang des jeweiligen Lichtsteuersignals 41T1, 41T2, 41Tn und des jeweiligen Ablenksteuersignals 42T1, 42T2, 42Tn im jeweiligen Zeitbereich T1, T2, Tn.

Im ersten Zeitbereich T1 erfolgt eine Abstrahlung von räumlich modulierten Licht 11 in Abhängigkeit vom ersten Lichtsteuersignal 41T1 und eine entsprechende Manipulation des selben abgestrahlten räumlich modulierten Lichtes im ersten Zeitbereich T1 in Abhängigkeit vom ersten Ablenksteuersignal 42T1, durch eine Schwenkung des in der Ablenkeinheit 30 enthaltenen Glasplättchens 31, sodass die Projektion 12 des räumlich modulierten Lichtes 11 der Lichtquelle 10 um den ersten Verschiebungswinkel WT1 innerhalb des Projektionswinkelbereiches P verschoben wird, wenn im ersten Zeitbereich T1 das räumlich modulierte Licht 11 der Lichtquelle 10 in Abhängigkeit vom ersten Lichtsteuersignal 41T1 abgestrahlt wird. Die verschobene Projektion 12 im ersten Zeitbereich T1 ist in Fig. 3c dargestellt.

Bevorzugt umfasst das räumlich modulierte Licht 11 der Lichtquelle 10 bzw. dessen Projektion 12 ausschließlich gleichartige quadratische Lichtsegmente 13. Bevorzugt erfolgt die Verschiebung der Projektion 12 des räumlich modulierten Lichtes 11 der Lichtquelle 10 innerhalb des Projektionswinkelbereiches P mit einem Verschiebungswinkel in einer Richtung 45° zu einem Seitenwinkel der quadratischen Lichtsegmente 13. Beträgt der Verschiebungswinkel dabei (Seitenwinkel*sqrt(2))/2 und erfolgt eine ausreichend schnelle und oszillierende Verschiebung über eine Vielzahl an Zeitbereichen T1, T2, Tn hinweg, so erhält man durch Überlappung die annähernd vierfache Anzahl an virtuellen Lichtsegmenten 13v im Vergleich zur nativen Anzahl an Lichtsegmenten 13.

Im vorliegenden Fall wird durch die Lichtquelle 10 ein räumlich moduliertes Licht 11 gebildet, welches 25 Lichtsegmente 13 in 5 Reihen und 5 Spalten aufweist. Die Projektion 12 dieses räumlich modulierten Lichtes 11 ist in den jeweiligen Zeitbereichen T1 und T2 der Fig. 3c gezeigt. Die oben beschriebene Überlappung führt nun dazu, dass, wie in Fig. 3d gezeigt, 9 Reihen und 9 Spalten mit virtuellen Lichtsegmenten 13v innerhalb des Projektionswinkelbereiches P entstehen.

Im zweiten Zeitbereich T2 erfolgt eine Abstrahlung von räumlich modulierten Licht 11 in Abhängigkeit vom zweiten Lichtsteuersignal 41T2 und eine entsprechende Manipulation des selben abgestrahlten räumlich modulierten Lichtes 11 im zweiten Zeitbereich T2 in Abhängigkeit vom zweiten Ablenksteuersignal 42T1 durch eine Schwenkung des in der Ablenkeinheit 30 enthaltenen Glasplättchens 31, sodass die Projektion 12 des räumlich modulierten Lichtes 11 der Lichtquelle 10 um den zweiten Verschiebungswinkel WT2 verschoben wird, wenn im zweiten Zeitbereich T2 das räumlich modulierte Licht 11 der Lichtquelle 10 in Abhängigkeit vom zweiten Lichtsteuersignal 41T2 abgestrahlt wird. Die verschobene Projektion 12 innerhalb des Projektionswinkelbereiches P im zweiten Zeitbereich T2 ist in Fig. 3c dargestellt.

Der erste Verschiebungswinkel WT1 und der zweite Verschiebungswinkel WT2 unterscheiden sich bevorzugt derart, dass diese gemessen an einer Neutralstellung der Ablenkeinheit 30, welche im Wesentlichen zu keiner Manipulation des abgestrahlten räumlich modulierten Lichtes führt (Verschiebungswinkel ist demnach 0°), symmetrisch in jeweils entgegengesetzte Richtungen weisen. Beispielsweise ist WT1 gleich -2° und WT2 gleich +2°.

Dementsprechend kann die Steuereinheit 40 ein Eingangssignal mit einer Vielzahl an zeitlich aufeinanderfolgenden Lichtdatenblöcken 43a1, 43a2, 43aN empfangen. Diese Vielzahl an zeitlich aufeinanderfolgenden Lichtdatenblöcke 43a1, 43a2, 43aN umfassen jeweils Ablenkdaten 43b1, 43b2, 43bN, womit eine Vielzahl an aufeinanderfolgenden Zeitbereichen T1, T2, Tn entsteht, in welchen jeder der einzelnen Lichtdatenblöcke 43a1, 43a2, 43aN mit jeweils aufweisenden Ablenkdaten 43b1, 43b2, 43bN repräsentativ für das abgestrahlte räumlich modulierte Licht 11 der Lichtquelle 10 sowie für den Verschiebungswinkel W innerhalb eines jeweiligen Zeitbereichs T1, T2, Tn ist, wobei die Zeitdauer der jeweiligen Zeitbereiche T1, T2, Tn im Wesentlichen gleich ist und zwischen 5ms und 50ms beträgt. Mit einer derart schnellen Variation des abgestrahlten räumlich modulierten Lichtes 11 und des Verschiebungswinkels W über die Vielzahl aufeinanderfolgender Zeitbereiche T1, T2, Tn können in Überlappung virtuelle Lichtsegmente 13v geschaffen werden. Damit kann für das menschliche Auge der Eindruck erweckt werden, dass die Anzahl der Lichtsegmente des projizierten räumlich modulierten Lichtes 11 im Vergleich zu der Anzahl der Lichtsegmente 12 des projizierten räumlich modulierten Lichtes 11 innerhalb eines einzelnen Zeitbereichs erhöht wird. Eine solche Überlappung ist schematisch in Fig. 3d dargestellt.

Um den Steueraufwand während des Betriebs möglichst gering zu halten und dennoch eine Vielzahl virtueller Lichtsegmente 13v zu schaffen, weist bevorzugt jeder n-te Lichtdatenblock von der Vielzahl an zeitlich aufeinanderfolgenden Lichtdatenblöcken 43a1, 43a2, 43aN Ablenkdaten 43b1, 43b2, 43bN auf, die zueinander gleich sind, wobei n einer natürlichen Zahl größer 1 entspricht. Damit sei gemeint, dass der durch die zueinander gleichen Ablenkdaten repräsentierte Verschiebungswinkel WT1, WT2, WTn gleich ist. Besonders bevorzugt ist dabei n gleich 2, womit alle zweiten Ablenkdaten gleich sind, womit jeder zweite Verschiebungswinkel gleich ist. Sowohl die Ablenkdaten 43b1, 43b2, 43bN als auch die Zahl n können bei Bedarf während des Betriebs geändert werden. Eine mögliche Ablenkdatenänderungsrate kann dabei 2 Änderungen pro Minute betragen.

Nun wird anhand der Fig. 4 auf eine Ausführungsform des Leuchtmoduls 1 eingegangen. Bei dieser Ausführungsform umfasst das Leuchtmodul 1 entsprechend Fig. 1 eine Lichtquelle 10, eine Projektionseinheit 20, eine Ablenkeinheit 30, sowie eine Steuereinheit 40. Die Steuereinheit 40 ist mit der Lichtquelle 10 signaltechnisch verbunden und dazu eingerichtet, innerhalb der jeweiligen Zeitbereiche T1, T2, Tn das Lichtsteuersignal 41T1, 41T2, 41Tn an die Lichtquelle 10 abzugeben, wobei die Lichtquelle 10 dazu eingerichtet ist, das Lichtsteuersignal 41T1, 41T2, 41Tn zu empfangen und in Abhängigkeit von dem Lichtsteuersignal 41T1, 41T2, 41Tn räumlich moduliertes Licht 11 im jeweiligen Zeitbereich T1, T2, Tn abzustrahlen.

Weiters ist in dieser Ausführungsform die Steuereinheit 40 signaltechnisch mit der Ablenkeinheit 30 verbunden und dazu eingerichtet, innerhalb der jeweiligen Zeitbereiche T1, T2, Tn das Ablenksteuersignal 42T1, 42T2, 42Tn an die Ablenkeinheit 30 abzugeben, wobei die Ablenkeinheit 30 dazu eingerichtet ist das Ablenksteuersignal 42T1, 42T2, 42Tn zu empfangen und das von der Lichtquelle 10 abgestrahlte räumlich modulierte Licht 11 in Abhängigkeit von dem Ablenksteuersignal 42T1, 42T2, 42Tn zu manipulieren, sodass innerhalb der jeweiligen Zeitbereiche T1, T2, Tn die Projektion des von der Lichtquelle abgestrahlten räumlich modulierten Lichtes vor das Leuchtmodul 1 mit einem Verschiebungswinkel WT1, WT2 innerhalb des Projektionswinkelbereiches P verschiebbar ist.

Die Steuereinheit 40 ist in dieser Ausführung also dazu eingerichtet, ein erstes Lichtsteuersignal 41T1 sowie ein erstes Ablenksteuersignal 42T1 aus dem ersten Lichtdatenblock 43a1 vom Eingangssignal 43 zu extrahieren und das erste Ablenksteuersignal 42T1 im ersten Zeitbereich T1 an die Ablenkeinheit 30 und das erste Lichtsteuersignal 41T1 im ersten Zeitbereich T1 an die Lichtquelle 10 auszugeben, sodass die Projektion 12 des räumlich modulierten Lichtes 11 der Lichtquelle 10 im ersten Zeitbereich T1 um den einen ersten Verschiebungswinkel WT1 verschoben wird, sobald das räumlich modulierte Licht 11 im ersten Zeitbereich T1 von der Lichtquelle 10 abgestrahlt wird. Wie bereits bei der Erläuterung zu den Zeitbereichen anhand der Fig. 3a bis Fig. 3d beschrieben, wird der erste Zeitbereich T1 bevorzugt durch die Abgabe des ersten Lichtsteuersignals 41T1 durch das Steuergerät 40 an die Lichtquelle 10 oder durch die Abgabe des ersten Ablenksteuersignals 42T1 durch das Steuergerät 40 an die Ablenkeinheit 30 gestartet.

Eine weitere Ausführungsform zeigt Fig. 5. In dieser Ausführungsform umfasst das Leuchtmodul 1 ebenso eine Lichtquelle 10, eine Projektionseinheit 20, eine Ablenkeinheit 30, sowie eine Steuereinheit 40. Die Steuereinheit 40 ist mit der Lichtquelle 10 signaltechnisch verbunden und dazu eingerichtet, innerhalb der jeweiligen Zeitbereiche T1, T2, Tn das Lichtsteuersignal 41T1, 41T2, 41Tn an die Lichtquelle 10 abzugeben, wobei die Lichtquelle 10 dazu eingerichtet ist, das Lichtsteuersignal 41T1, 41T2, 41Tn zu empfangen und in Abhängigkeit von dem Lichtsteuersignal 41T1, 41T2, 41Tn räumlich moduliertes Licht 11 innerhalb der jeweiligen Zeitbereiche T1, T2, Tn abzustrahlen.

Weiters ist in dieser vorteilhaften Ausführungsform vorgesehen, dass die Steuereinheit 40 ein erstes Lichtsteuersignal 41T1 sowie die ersten Ablenkdaten 43b1 aus dem ersten Lichtdatenblock 43a1 extrahiert und anschließend die ersten Ablenkdaten 43bT1 derart in das erste Lichtsteuersignal 41T1 integrieren kann, sodass ein Teil 11' des abgestrahlten räumlich modulierten Lichtes 11 im ersten Zeitbereich T1 Informationen über den ersten Verschiebungswinkel WT1 im selben ersten Zeitbereich T1 enthält. Der Teil 11' des abgestrahlten räumlich modulierten Lichtes 11 kann damit ein Lichtsegment 12 umfassen, welches abgeschottet von den restlichen Lichtsegmenten des räumlich modulierten Lichtes 11 nicht über die Projektionseinheit 20 vor das Leuchtmodul projiziert wird (auch wenn eine Manipulation des räumlich modulierten Lichtes 11 passiert). Der Teil 11' des räumlich modulierten Lichtes 11 ist lediglich schematisch in Fig. 5 dargestellt und wird seitlich von der Lichtquelle 10 abgestrahlt. Um eine derartige seitliche Abstrahlung zu erreichen kann beispielsweise ein, in Fig. 5 nicht gezeigter, Umlenkspiegel den einen Teil 11' des räumlich modulierten Lichtes 11 seitlich ablenken.

Ein Extrahieren und anschließendes Integrieren umfasst auch die Möglichkeit, dass der erste Lichtdatenblock 43a1 bereits (ohne schnittstellenspezifische Anpassungen) direkt das räumlich modulierte Licht 11 der Lichtquelle 10 im ersten Zeitbereich T1 beschreibt und die aufweisenden ersten Ablenkdaten 43b1 bereits direkt einen Teil 11' des räumlich modulierte Licht 11 der Lichtquelle 10 im ersten Zeitbereich T1 beschreiben. Dies kann der Fall sein, wenn die Ablenkdaten 43b1, 43b2, 43bN beispielsweise nach den Ausformungen nach Fig. 2a, 2b oder 2c in die jeweiligen Lichtdatenblöcke 43a1, 43a2, 43aN integriert werden. In diesem Fall stellt die Steuereinheit 40 das erste Lichtsteuersignal 41T1 für die Lichtquelle 10 anhand einer direkten Weitergabe des ersten Lichtdatenblocks 43a1 an die Lichtquelle 10 bereit.

Weiters ist in dieser Ausführungsform ein Lichtaufnehmer 50 vorgesehen, welcher dazu eingerichtet ist, den einen Teil 11' des abgestrahlten räumlich modulierten Lichtes 11 der Lichtquelle 10 aufzunehmen, welcher Informationen über den ersten Verschiebungswinkel WT1 im ersten Zeitbereich T1 enthält und ein darauf basierendes erstes Ablenksteuersignal 42T1 an die Ablenkeinheit 30 auszugeben, sodass die Projektion 12 des räumlich modulierten Lichtes 11 der Lichtquelle 10 im ersten Zeitbereich T1 um den ersten Verschiebungswinkel WT1 innerhalb des Projektionswinkelbereiches P verschoben wird, sobald das räumlich modulierte Licht 11 im ersten Zeitbereich T1 von der Lichtquelle 10 abgestrahlt wird.

Der Lichtaufnehmer kann bevorzugt eine Photodiode (nicht gezeigt) umfassen.

In dieser Ausführung kann die Ablenkeinheit 30 in Zusammenwirkung mit dem Lichtaufnehmer 50 unabhängig vom restlichen Leuchtmodul 1 gemacht werden, was die elektronischen Schnittstellen betrifft.

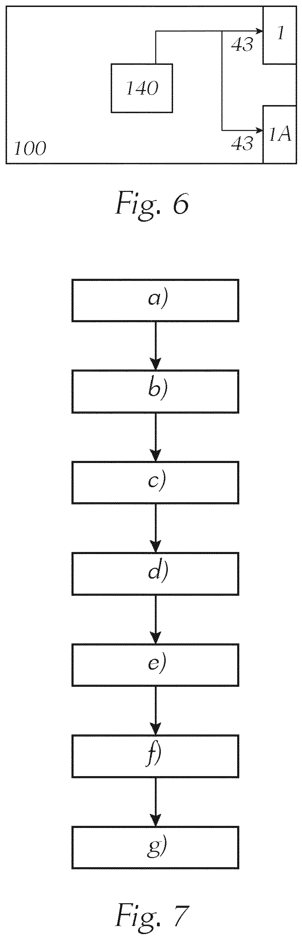

Die Erfindung betrifft auch ein Kraftfahrzeug 100 (gezeigt in Fig. 6) mit einem Leuchtmodul 1 und weiters ein Kraftfahrzeug 100, welches zumindest ein zweites Leuchtmodul 1A aufweist, welches baugleich dem einen Leuchtmodul 1 ist, wobeidie Steuereinheit 40A des zweiten Leuchtmoduls 1A dasselbe Eingangssignal 43 wie die Steuereinheit 40 des einen Leuchtmoduls 1 empfängt und der erste Lichtdatenblock 43a1 weiters eine Identifikation umfasst, die dem einen Leuchtmodul 1 oder dem zweiten Leuchtmodul 1A eindeutig zuordenbar ist. Das zweite Leuchtmodul 1A kann die Projektion 12 des ersten Leuchtmoduls 1 über den Projektionswinkelbereich P hinweg erweitern. Damit können im Wesen der Erfindung einem zu generierenden Lichtbild weitere Freiheiten in dessen Adaption gegeben werden, wobei eine Skalierbarkeit der gesamten Beleuchtungseinrichtung eines Kraftfahrzeuges 100 erreicht wird, ohne die Komplexität der Ansteuerung wesentlich zu erhöhen. Das Eingangssignal 43 kann wie in Fig. 6 gezeigt von einem übergeordneten Steuergerät 140 bereitgestellt werden.

Fig. 7 zeigt nun ein Verfahren zum Betreiben des in Fig. 1 beschriebenen Leuchtmoduls 1, wobei in einem ersten Schritt a) der erste Lichtdatenblock 43a1 bereitgestellt wird, welcher zumindest teilweise in einem ersten Zeitbereich T1 repräsentativ für das abgestrahlte räumlich modulierte Licht 11 der Lichtquelle 10 ist.

Das in Fig. 6 gezeigte übergeordnete Steuergerät 140 kann diesen ersten Lichtdatenblock 43a1 über das Eingangssignal 43 bereitstellen, wobei die Grundlage des bereitgestellten ersten Lichtdatenblocks 43a1 beispielsweise fahrzeugseitige Anforderungen sein können. Diese fahrzeugseitigen Anforderungen können bestimmte Lichtverteilungen umfassen, bei denen abgespeicherte statische Lichtverteilungen, wie Fernlichtverteilungen, mit Ausblendinformationen kombiniert werden, sodass ein Lichtdatenblock 43a1, 43a2, 43aN entsteht, welcher zumindest teilweise repräsentativ für ein räumlich moduliertes Licht im jeweiligen Zeitbereich T1, T2, Tn ist. In diesem Fall sind die Lichtdatenblöcke 43a1, 43a2, 43aN also repräsentativ für räumlich moduliertes Licht in den jeweiligen Zeitbereichen T1, T2, Tn eines Ausblendszenarios.

Im gezeigten Schritt b) werde ersten Ablenkdaten 43b1 bereitgestellt, welche im selben ersten Zeitbereich T1 repräsentativ für den ersten Verschiebungswinkel WT1 sind,

Diese ersten Ablenkdaten 43b1 können vom selben übergeordneten Steuergerät 140 bereitgestellt werden, wobei die Grundlage der bereitgestellten ersten Ablenkdaten 43b1 weitere fahrzeugseitige Anforderungen sind. Die weiteren fahrzeugseitigen Anforderungen können eine Verschiebung der Projektion 12 des räumlich modulierten Lichtes 11 der Lichtquelle 10 um einen bestimmten ersten Verschiebungswinkel WT1 umfassen.

Im Schritt c) werden die ersten Ablenkdaten 43b1 in den ersten Lichtdatenblock 43a1 integriert.

Die ersten Ablenkdaten 43b1 können ebenso vom selben übergeordneten Steuergerät 140 in den ersten Lichtdatenblock 43a1 integriert werden. Die Integration kann beispielsweise entsprechend der Ausgestaltung nach Fig. 2b durch die Reduktion der Bittiefe der Intensitätswerte I1, I2, In oder entsprechend der Ausgestaltung nach Fig. 2c, durch die zumindest teilweise Ausnutzung eines Kanals R, G, B des ersten Lichtdatenblocks 43a1, insbesondere jedes Lichtdatenblocks 43a1, 43a2, 43aN erfolgen.

Anschließend kann der erste Lichtdatenblock 43a1 samt integrierter erster Ablenkdaten 43b1 über eine Serialisierung (entsprechend der Beschreibung zu Fig. 2c) zu einem seriellen Datenstrang 44 transformiert werden. Danach wird im Schritt d) der ersten Lichtdatenblock 43a1 samt integrierter erster Ablenkdaten 43b1 über das Eingangssignal 43 an die Steuereinheit 40 übertragen.

Im weiteren Schritt e) wertet die Steuereinheit 40 das Eingangssignal 43 aus. Die Auswertung kann im vorliegenden Fall die Deserialisierung des Eingangssignals 43 umfassen. Weiters kann die Auswertung auch die Extraktion des ersten Lichtsteuersignals 41T1 aus dem ersten Lichtdatenblock 43a1 umfassen. Diese kann durch eine voreingestellte Filterung realisiert werden.

Im Schritt e) kann weiters entsprechend der Ausführung des Leuchtmoduls 1 nach Fig. 4 auch das erste Ablenksteuersignal 42T1 aus dem ersten Lichtdatenblock 43a1 extrahiert werden.

Nach der alternativen Ausführung des Leuchtmoduls 1 nach Fig. 5 kann in Schritt e) die Steuereinheit 40 das erste Lichtsteuersignal 41T1 sowie die ersten Ablenkdaten 43b1 aus dem ersten Lichtdatenblock 43a1 extrahieren und vor Schritt f) kann die Steuereinheit 40 die ersten Ablenkdaten 43b1 derart in das erste Lichtsteuersignal 41T1 integrieren, sodass ein Teil 11' des abgestrahlten räumlich modulierten Lichtes 11 der Lichtquelle 10 im ersten Zeitbereich T1 Informationen über den ersten Verschiebungswinkel WT1 im selben ersten Zeitbereich T1 enthält. Eine mögliche Art wie die Steuereinheit 40 die Ablenkdaten 43b1 in das erste Lichtsteuersignal 41T1 integrieren kann, wurde anhand der Fig. 5 bereits beschrieben.

Im darauffolgenden Schritt f) wird das erste Lichtsteuersignal 41T1 gemäß des ersten Lichtdatenblocks 43a1 für die Lichtquelle 10 im ersten Zeitbereich T1 bereitgestellt.

Dabei kann insbesondere die Steuereinheit 40 das erste Lichtsteuersignal 41T1 im ersten Zeitbereich T1 an die Lichtquelle 10 ausgeben bzw. der Lichtquelle 10 bereitstellen.

Wenngleich das das erste Lichtsteuersignal 41T1 im ersten Zeitbereich T1 bereitgestellt wird, so schließt dies nicht die Möglichkeit aus, dass der erste Zeitbereich wie in Fig. 3a beschrieben auch von der Abgabe des ersten Lichtsteuersignals 41T1 durch das Steuergerät 40 gestartet wird.

Im abschließenden Schritt g) wird nun das erste Ablenksteuersignal 42T1 gemäß der im ersten Lichtdatenblock 43a1 integrierten ersten Ablenkdaten 43b1, der Ablenkeinheit 30 im selben ersten Zeitbereich T1 bereitgestellt.

Gemäß der Ausführung des Leuchtmoduls nach Fig. 4 kann im Schritt g) die Steuereinheit 40 das erste Ablenksteuersignal 42T1 im ersten Zeitbereich T1 an die Ablenkeinheit 30 ausgeben, sodass die Projektion 12 des räumlich modulierten Lichts der Lichtquelle 10 im ersten Zeitbereich T1 um den ersten Verschiebungswinkel WT1 innerhalb des Projektionswinkelbereiches P verschoben wird, sobald das räumlich modulierte Licht 11 im ersten Zeitbereich T1 von der Lichtquelle 10 abgestrahlt wird.

Gemäß der alternativen Ausführung des Leuchtmoduls nach Fig. 5 weist das Leuchtmodul den Lichtaufnehmer 50 auf, welcher vor dem Schritt g) den zumindest einen Teil 11' des abgestrahlten räumlich modulierten Lichtes 11 der Lichtquelle 10 im ersten Zeitbereich T1 aufnehmen kann, um sodann im Schritt g) ein darauf basierendes erstes Ablenksteuersignal 42T1 im ersten Zeitbereich T1 an die Ablenkeinheit 30 abzugeben, sodass die Projektion 12 des räumlich modulierten Lichtes 11 der Lichtquelle 10 im ersten Zeitbereich T1 um den ersten Verschiebungswinkel WT1 innerhalb des Projektionswinkelbereiches P verschoben wird, sobald das räumlich modulierte Licht 11 im ersten Zeitbereich T1 von der Lichtquelle 10 abgestrahlt wird.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Leuchtmodul (1) für eine Kraftfahrzeugleuchte umfassend eine Lichtquelle (10), eine Projektionseinheit (20), eine Ablenkeinheit (30), sowie eine Steuereinheit (40),
wobei die Lichtquelle (10) dazu eingerichtet ist, ein Lichtsteuersignal (41) zu empfangen und in Abhängigkeit von dem Lichtsteuersignal (41) räumlich moduliertes Licht (11) abzustrahlen,
wobei die Projektionseinheit (20) dazu eingerichtet ist, das von der Lichtquelle (10) abgestrahlte räumlich modulierte Licht (11) innerhalb eines Projektionswinkelbereiches (P) vor das Leuchtmodul (1) zu projizieren,
wobei die Ablenkeinheit (30) dazu eingerichtet ist, ein Ablenksteuersignal (42) zu empfangen und das von der Lichtquelle (10) abgestrahlte räumlich modulierte Licht (11) in Abhängigkeit von dem Ablenksteuersignal (42) zu manipulieren, sodass die Projektion (12) des von der Lichtquelle abgestrahlten räumlich modulierten Lichtes vor das Leuchtmodul (1) mit einem Verschiebungswinkel (W) innerhalb des Projektionswinkelbereiches (P) verschiebbar ist
**dadurch gekennzeichnet, dass**
die Steuereinheit (40) dazu eingerichtet ist, ein Eingangssignal (43) zu empfangen, auszuwerten und auf Grundlage dessen das Lichtsteuersignal (41) an die Lichtquelle (10) abzugeben,
wobei das Eingangssignal (43) einen ersten Lichtdatenblock (43a1) umfasst, der zumindest teilweise in einem ersten Zeitbereich (T1) repräsentativ für das abgestrahlte räumlich modulierte Licht der Lichtquelle (10) ist und in diesem ersten Lichtdatenblock erste Ablenkdaten (43b1) enthalten sind, welche im selben ersten Zeitbereich (T1) repräsentativ für einen ersten Verschiebungswinkel (WT1) sind.

2. Leuchtmodul nach Anspruch 1, wobei die Steuereinheit (40) dazu eingerichtet ist ein erstes Lichtsteuersignal (41T1) sowie ein erstes Ablenksteuersignal (42T1) aus dem ersten Lichtdatenblock (43a1) vom Eingangssignal (43) zu extrahieren und das erste Ablenksteuersignal (42T1) im ersten Zeitbereich (T1) an die Ablenkeinheit (30) und das erste Lichtsteuersignal (41T1) im ersten Zeitbereich (T1) an die Lichtquelle (10) auszugeben, sodass die Projektion (12) des räumlich modulierten Lichtes der Lichtquelle (10) im ersten Zeitbereich (T1) um einen ersten Verschiebungswinkel (WT1) verschoben wird, sobald das räumlich modulierte Licht (11) im ersten Zeitbereich (T1) von der Lichtquelle (10) abgestrahlt wird.

3. Leuchtmodul nach Anspruch 1, wobei die Steuereinheit dazu eingerichtet ist ein erstes Lichtsteuersignal (41T1) sowie die ersten Ablenkdaten (43b1) aus dem ersten Lichtdatenblock (43a1) zu extrahieren und die ersten Ablenkdaten (43b1) derart in das erste Lichtsteuersignal (41T1) zu integrieren, sodass ein Teil (11') des abgestrahlten räumlich modulierten Lichtes (11) im ersten Zeitbereich (T1) Informationen über den ersten Verschiebungswinkel (WT1) im selben ersten Zeitbereich (T1) enthält,
wobei das Leuchtmodul (1) weiters einen Lichtaufnehmer (50) aufweist, welcher dazu eingerichtet ist, den einen Teil (11') des abgestrahlten räumlich modulierten Lichtes der Lichtquelle (10) aufzunehmen, welcher Informationen über den ersten Verschiebungswinkel (WT1) im ersten Zeitbereich (T1) enthält und ein darauf basierendes erstes Ablenksteuersignal (42T1) an die Ablenkeinheit (30) auszugeben, sodass die Projektion (12) des räumlich modulierten Lichtes der Lichtquelle (10) im ersten Zeitbereich (T1) um den ersten Verschiebungswinkel (WT1) verschoben wird, sobald das räumlich modulierte Licht (11) im ersten Zeitbereich (T1) von der Lichtquelle (10) abgestrahlt wird.

4. Leuchtmodul nach einem der vorgehenden Ansprüche, wobei das Eingangssignal (43) eine Vielzahl zeitlich aufeinanderfolgender Lichtdatenblöcke (43a1, 43a2, 43aN) mit jeweils aufweisenden Ablenkdaten (43b1, 43b2, 43bN) umfasst, womit eine Vielzahl zeitlich aufeinanderfolgender Zeitbereiche (T1, T2, Tn) beschrieben werden, in welchen jeder der einzelnen Lichtdatenblöcke (43a1, 43a2, 43aN) mit jeweils aufweisenden Ablenkdaten (43b1, 43b2, 43bN) repräsentativ für das abgestrahlte räumlich modulierte Licht der Lichtquelle sowie für den Verschiebungswinkel (WT1, WT2, WTn) im jeweiligen Zeitbereichs (T1, T2, Tn) ist, wobei die Zeitdauer der jeweiligen Zeitbereiche (T1, T2, Tn) im Wesentlichen gleich ist und zwischen 5ms und 50ms beträgt.

5. Leuchtmodul nach Anspruch 4, wobei jeder n-te Lichtdatenblock von der Vielzahl an zeitlich aufeinanderfolgenden Lichtdatenblöcken (43a1, 43a2, 43aN) Ablenkdaten enthält, die zueinander gleich sind und n einer natürlichen Zahl größer 1 entspricht.

6. Leuchtmodul nach einem der vorhergehenden Ansprüche, wobei das von der Lichtquelle (10) abgestrahlte räumlich modulierte Licht (11) eine Vielzahl an Lichtsegmenten (13) umfasst und der erste Lichtdatenblock Intensitätswerte (I1, I2, In) umfasst, welche die Lichtintensität von zumindest einem Teil der Vielzahl an Lichtsegmenten (13) im ersten Zeitbereich (T1) beschreiben.

7. Leuchtmodul nach Anspruch 6, wobei die Intensitätswerte (I1, I2, In) jeweils eine Bittiefe von 4 bis 32 Bit aufweisen und die ersten Ablenkdaten (43b1) in zumindest einem Bit dieser Bittiefe integriert sind.

8. Leuchtmodul nach Anspruch 6, wobei der erste Lichtdatenblock mehrere Kanäle (Vs, R, G, B) aufweist und zumindest ein Kanal (Vs, R, G, B) die ersten Ablenkdaten (43b1) beinhaltet.

9. Kraftfahrzeug mit einem Leuchtmodul nach einem der vorangegangen Ansprüche.

10. Kraftfahrzeug nach Anspruch 9, wobei das Kraftfahrzeug zumindest ein zweites Leuchtmodul aufweist, welches baugleich dem einen Leuchtmodul (1) ist und die Steuereinheit des zweiten Leuchtmodul dasselbe Eingangssignal (43) wie die Steuereinheit (40) des einen Leuchtmoduls (1) empfängt und der erste Lichtdatenblock (43a1) weiters eine Identifikation umfasst, die dem einen Leuchtmodul (1) oder dem zweiten Leuchtmodul eindeutig zuordenbar ist.

11. Verfahren zum Betreiben eines Leuchtmoduls (1) für eine Kraftfahrzeugleuchte, wobei das Leuchtmodul eine Lichtquelle (10), eine Projektionseinheit (20), eine Ablenkeinheit (30), sowie eine Steuereinheit (40) umfasst,
wobei die Lichtquelle (10) dazu eingerichtet ist, ein Lichtsteuersignal (41) zu empfangen und in Abhängigkeit von dem Lichtsteuersignal (41) räumlich moduliertes Licht (11) abzustrahlen,
wobei die Projektionseinheit (20) dazu eingerichtet ist, das von der Lichtquelle (10) abgestrahlte räumlich modulierte Licht (11) innerhalb eines Projektionswinkelbereiches (P) vor das Leuchtmodul (1) zu projizieren,
wobei die Ablenkeinheit (30) dazu eingerichtet ist, ein Ablenksteuersignal (42) zu empfangen und das von der Lichtquelle (10) abgestrahlte räumlich modulierte Licht (11) in Abhängigkeit von dem Ablenksteuersignal (42) zu manipulieren, sodass die Projektion (12) des von der Lichtquelle abgestrahlten räumlich modulierten Lichtes vor das Leuchtmodul mit einem Verschiebungswinkel (W) innerhalb des Projektionswinkelbereiches (P) verschiebbar ist,
**wobei das Verfahren folgende Schritte aufweist:**
a) Bereitstellen eines ersten Lichtdatenblocks (43a1) welcher zumindest teilweise in einem ersten Zeitbereich (T1) repräsentativ für das abgestrahlte räumlich modulierte Licht der Lichtquelle (10) ist,
b) Bereitstellen von ersten Ablenkdaten (43b1) welche im selben ersten Zeitbereich (T1) repräsentativ für einen ersten Verschiebungswinkel (WT1) sind,
c) Integrieren der ersten Ablenkdaten (43b1) in den ersten Lichtdatenblock (43a1),
d) Übertragen des ersten Lichtdatenblocks (43a1) samt integrierter erster Ablenkdaten (43b1) über ein Eingangssignal (43) an die Steuereinheit (40),
e) Auswerten des Eingangssignals (43) durch die Steuereinheit (40),
f) Bereitstellen eines ersten Lichtsteuersignals (41T1) an die Lichtquelle (10) im ersten Zeitbereich (T1) gemäß des ersten Lichtdatenblocks (43a1),
g) Bereitstellen eines ersten Ablenksteuersignals (42T1) an die Ablenkeinheit (30) im selben ersten Zeitbereich (T1) gemäß der im ersten Lichtdatenblock (43a1) integrierten ersten Ablenkdaten (43b1),

12. Verfahren nach Anspruch 11, wobei im Schritt e) die Steuereinheit (40) ein erstes Lichtsteuersignal (41T1) sowie ein erstes Ablenksteuersignal (42T1) aus dem ersten Lichtdatenblock (43a1) extrahiert und im Schritt f) die Steuereinheit (40) das erste Lichtsteuersignal (41T1) im ersten Zeitbereich (T1) an die Lichtquelle (10) ausgibt und im Schritt g) die Steuereinheit (40) das erste Ablenksteuersignal (42T1) im selben ersten Zeitbereich (T1) an die Ablenkeinheit (30) ausgibt, sodass die Projektion (12) des räumlich modulierten Lichts der Lichtquelle (10) im ersten Zeitbereich (T1) um den ersten Verschiebungswinkel (WT1) verschoben wird, sobald das räumlich modulierte Licht (11) im ersten Zeitbereich (T1) von der Lichtquelle (10) abgestrahlt wird.

13. Verfahren nach Anspruch 11, wobei im Schritt e) die Steuereinheit (40) das erste Lichtsteuersignal (41T1) sowie die ersten Ablenkdaten (43b1) aus dem ersten Lichtdatenblock (43a1) extrahiert und vor Schritt f) die Steuereinheit (40) die ersten Ablenkdaten (43b1) derart in das erste Lichtsteuersignal (41T1) integriert, sodass ein Teil (11') des abgestrahlten räumlich modulierten Lichtes (11) im ersten Zeitbereich (T1) Informationen über den ersten Verschiebungswinkel (WT1) im selben ersten Zeitbereich (T1) enthält,
wobei weiters das Leuchtmodul (1) einen Lichtaufnehmer (50) aufweist, welcher dazu eingerichtet ist vor dem Schritt g) den zumindest einen Teil (11') des abgestrahlten räumlich modulierten Lichtes (11) der Lichtquelle (10) im ersten Zeitbereich (T1) aufzunehmen, um sodann im Schritt g) ein darauf basierendes erstes Ablenksteuersignal (42T1) im ersten Zeitbereich (T1) an die Ablenkeinheit (30) abzugeben, sodass die Projektion (12) des räumlich modulierten Lichtes (11) der Lichtquelle (10) im ersten Zeitbereich (T1) um den ersten Verschiebungswinkel (WT1) verschoben wird, sobald das räumlich modulierte Licht (11) im ersten Zeitbereich (T1) von der Lichtquelle (10) abgestrahlt wird.
